# FASCICULE DE BREVET EUROPEEN

(11) **EP 3 973 754 B1**
(45) Date de publication et mention de la délivrance du brevet: **28.08.2024**
(21) Numéro de dépôt: 21196761.7
(22) Date de dépôt: 15.09.2021
(51) Int. Cl.: A01B 3/46, A01B 15/14

(54) **CHARRUE RÉVERSIBLE SEMI-PORTÉE À CHARIOT OU MONOROUE**
DREHPFLUG VOM TYP AUFSATTELPFLUG MIT WAGEN ODER EINZELRAD
SEMI-MOUNTED REVERSIBLE PLOUGH WITH BARROW OR SINGLE WHEEL

(30) Priorité: 28.09.2020 FR 2009812
(43) Date de publication de la demande: 30.03.2022
(73) Titulaire: Kuhn-Huard S.A.S, 44110 Chateaubriant (FR)
(72) Inventeur: LE CLEC'H, Ronan, 44390 NORT-SUR-ERDRE (FR)
(74) Mandataire: Cabinet Nuss

(56) Documents cités:
- EP-A1- 1 082 888
- EP-A1- 1 157 600
- DE-U1- 9 205 455

## Description

La présente invention concerne le domaine du machinisme agricole et en particulier le domaine technique des charrues, et notamment des charrues semi-portées réversibles, et vise une charrue améliorée de ce type.

Les charrues du type évoqué ci-dessus comprennent généralement une structure en deux parties (avant et arrière) articulées entre elles et constituées chacune par une partie de bâti portant des couples de corps de labour opposés. Ces deux parties sont situées de part et d'autre d'un chariot ou d'une roue de support (en appui au sol au moins durant les phases de travail ou d'utilisation). Cette charrue comprend en outre au moins un moyen de retournement des deux parties de bâti avec les corps de labour (deux positions de travail : labour à droite et labour à gauche) et un dispositif d'attelage pour l'accrochage et le raccordement de la partie avant à un véhicule tracteur.

Une charrue de ce type est notamment connue du document EP 1 157 600.

Ce document divulgue une charrue réversible semi-portée à chariot ou monoroue, déplacée en utilisation selon une direction d'avance et comprenant une partie avant de bâti principal et une partie arrière de bâti principal dont chacune porte des corps de labour. Ces deux parties de bâti principal avec leurs corps de labour sont respectivement solidaires de parties avant et arrière d'un cadre de liaison reliées mutuellement par une liaison articulée (ici du type complexe combinant une coulisse, une butée et un pivot) connectant les deux parties de bâti principal entre elles par l'intermédiaire de ces deux parties. Cette charrue comprend également un châssis support avec une partie avant fixe, solidaire du chariot ou de la roue, et une partie arrière basculante, reliée à la partie avant fixe par un palier d'assemblage pivotant avec un axe perpendiculaire à la direction d'avance. La partie arrière basculante met en oeuvre une multitude d'éléments différents tels qu'un levier basculant, un vérin, deux articulations et d'au moins une entretoise. La partie avant du bâti de liaison est reliée à la partie avant fixe du châssis support par un palier d'articulation pivotante avant avec un axe parallèle à la direction d'avance, et la partie arrière du bâti de liaison est reliée à la partie arrière basculante du châssis support par un palier d'articulation pivotante arrière avec un axe situé dans un plan contenant la direction d'avance, les paliers d'articulation pivotante avant et arrière formant des paliers de guidage aux fins de retournement respectivement des parties avant et arrière du bâti principal.

Cette construction connue comporte donc un mécanisme permettant de soulever facilement la partie arrière du bâti principal et de la conserver dans cette position relevée pendant le retournement, avec relativement peu de composants et donc avec un surcoût et un surpoids faibles. Grâce à ce mécanisme, il est possible d'éviter que les derniers corps de labour n'entrent en contact avec le sol lors de la phase de retournement pour passer d'un labour à droite à un labour à gauche et vice-versa. De plus, la partie arrière de la charrue peut être positionnée sensiblement parallèlement au sol lors du transport.

Toutefois, cette construction connue est encore relativement complexe, présente des points de faiblesse constructive et surtout manque de stabilité à l'usage. Des constructions de charrues réversibles sensiblement similaires et présentant les mêmes inconvénients sont également connues des documents EP 1 082 888 et DE 9205455.

La présente invention a pour but de pallier ces inconvénients et de proposer une version structurellement et fonctionnellement améliorée de la charrue connue par le document EP 1 157 600.

A cet effet, l'invention propose une charrue semi-portée du type évoqué ci-dessus et qui est caractérisée en ce que l'axe du palier d'articulation pivotante avant coupe l'axe du palier d'assemblage pivotant au niveau dudit palier d'assemblage pivotant.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :
[Fig. 1] représente en vue de dessus une charrue réversible semi-portée avec un chariot dans une position de travail, selon un mode de réalisation de l'invention (seul un corps de labour de chaque couple de corps de labour est visible du fait de leur superposition mutuelle) ;
[Fig. 2] est une vue en élévation latérale de la charrue de la figure 1 en position de transport ;
[Fig. 3] est une vue partielle en perspective et à une autre échelle de la région du chariot (roue de gauche enlevée) et du bâti ou cadre de liaison faisant partie de la charrue des figures 1 et 2, dans une des positions de travail de ladite charrue ;
[Fig. 4] est une vue en élévation latérale de l'objet représenté figure 3, et,
[Fig. 5] est une vue partielle de dessus et à une autre échelle du chariot, du bâti de liaison et de la partie arrière faisant partie de la charrue des figures 1 et 2, dans la position des figures 3 et 4.

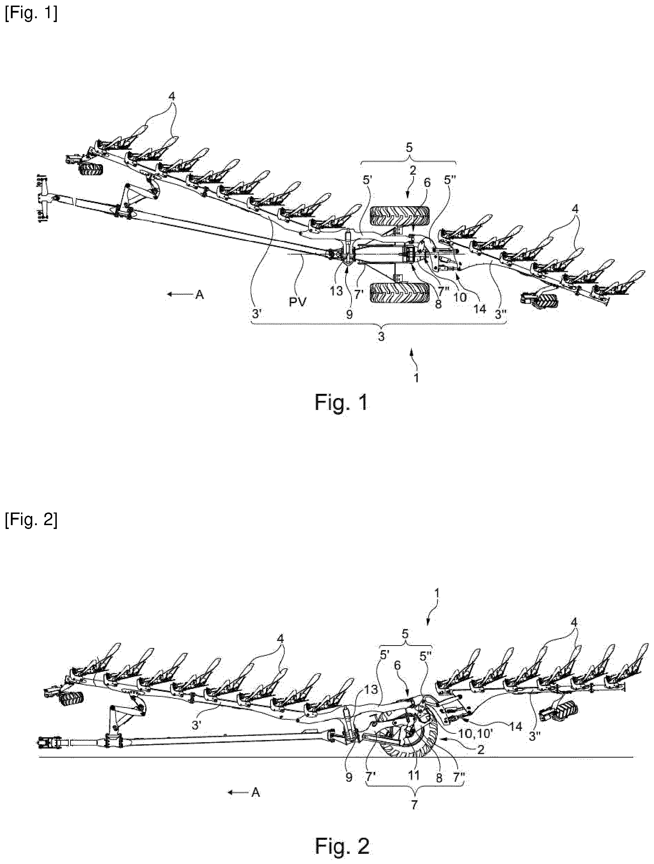

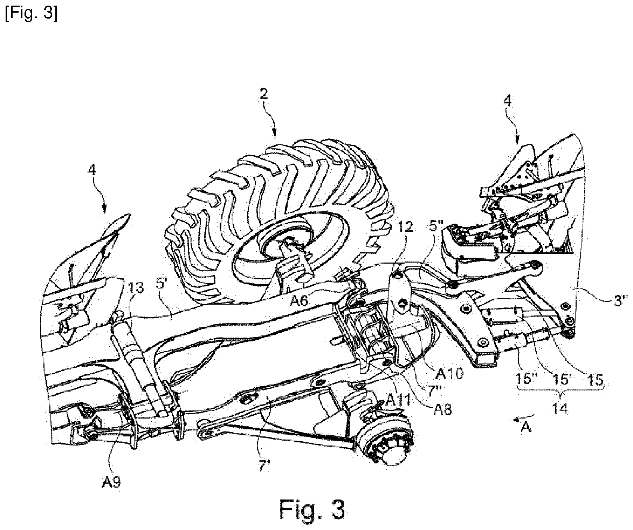

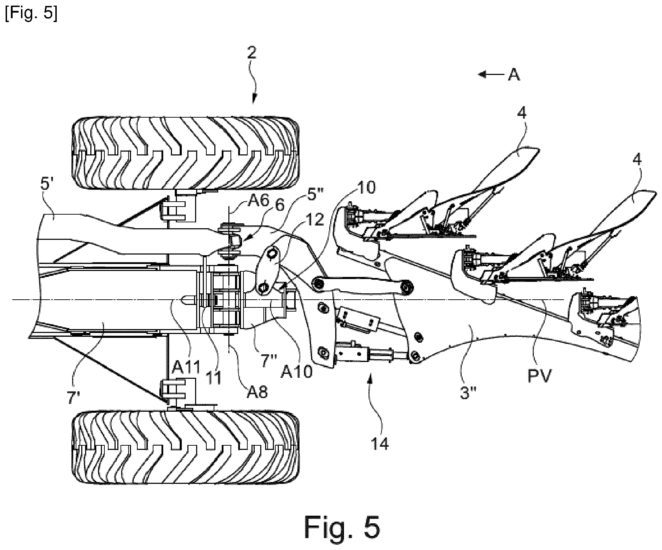

Les figures 1 et 2, et les figures 3 à 5 de manière partielle, montrent une charrue réversible (1) semi-portée à chariot (2) ou monoroue, déplacée en utilisation selon une direction d'avance (DA). La charrue (1) comprend une structure en plusieurs parties articulées entre elles. La charrue représentée comprend une partie avant (3') de bâti principal (3) et une partie arrière (3") de bâti principal (3) dont chacune porte des corps de labour (4). Ces deux parties de bâti principal (3' et 3") sont respectivement solidaires de parties avant (5') et arrière (5") d'un bâti de liaison (5) reliées mutuellement par une liaison articulée (6) connectant les deux parties de bâti principal (3' et 3") entre elles par leur intermédiaire. La liaison articulée (6) présente un axe (A6) sensiblement perpendiculaire à la direction d'avance (DA). Dans l'exemple de réalisation représenté aux figures 1 et 2, la partie avant (5') du bâti de liaison porte une paire de corps (4). Cette charrue (1) comprend également un châssis support (7) avec une partie avant fixe (7'), solidaire du chariot (2) ou de la roue, et une partie arrière basculante (7"), reliée à la partie avant fixe (7') par un palier d'assemblage pivotant (8) avec un axe (A8) perpendiculaire à la direction d'avance (DA). Cet axe (A8) est avantageusement parallèle à l'axe de rotation des deux roues du chariot ou de la monoroue.

La partie avant (5') de bâti de liaison (5) est reliée à la partie avant fixe (7') du châssis support (7) par un palier d'articulation pivotante avant (9) d'axe (A9) parallèle à la direction d'avance (DA), et la partie arrière (5") de bâti de liaison (5) est reliée à la partie arrière basculante (7") du châssis support (7) par un palier d'articulation pivotante arrière (10) d'axe (A10) situé dans un plan contenant la direction d'avance (DA). Ces paliers d'articulation pivotante avant et arrière (9 et 10) forment des paliers de guidage du retournement respectivement des parties avant et arrière (3' et 3") du bâti principal (3).

Conformément à l'invention, l'axe (A9) du palier d'articulation pivotante avant (9) coupe l'axe (A8) du palier d'assemblage pivotant (8) au niveau dudit palier d'assemblage pivotant (8). Préférentiellement, le point d'intersection entre les axes (A9) et (A8) est situé sensiblement au milieu de l'articulation physique formant le palier (8).

Du fait de cette disposition constructive, l'invention permet d'aboutir à une simplification de la cinématique. Grâce à cette cinématique, la partie arrière de la charrue (1) est automatiquement dans sa position adéquate, relevée par rapport au sol dès la sortie de terre pour que le retournement puisse se faire. Après le retournement (passage de labour à droite à labour à gauche et inversement) la charrue (1) est directement en position pour faire une entrée en terre et poursuivre le labour. Par rapport à la charrue connue précitée, la cinématique selon l'invention est aussi plus stable.

Préférentiellement, l'axe (A10) du palier d'articulation pivotante arrière (10) coupe également l'axe (A8) du palier d'assemblage pivotant (8) au niveau dudit palier d'assemblage pivotant (8), et le point d'intersection entre les axes (A10) et (A8) est avantageusement aussi situé sensiblement au milieu de l'articulation physique formant le palier d'assemblage pivotant (8). Le palier d'assemblage pivotant (8) est avantageusement réalisé en une seule pièce sous la forme d'un fourreau. Selon une construction alternative, le palier d'assemblage pivotant (8) peut être réalisé en deux parties.

En accord avec une autre caractéristique favorable à une simplification de la cinématique, il peut être prévu que, en position de travail de la charrue (1), les axes (A9) et (A10) respectivement des paliers d'articulation pivotante avant et arrière (9 et 10) sont situés dans un même plan vertical (PV), et sont préférentiellement mutuellement alignés.

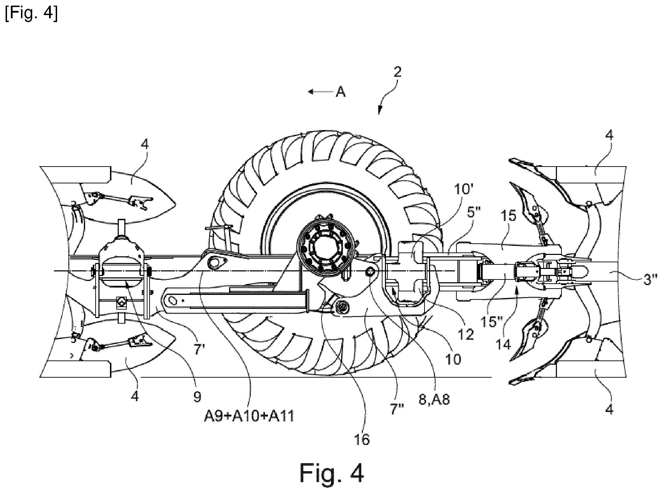

Selon une autre caractéristique constructive en faveur de la simplification de la cinématique, il peut être prévu que, en position de travail de la charrue (1), l'axe ou l'un (A6) des axes d'articulation de la liaison articulée (6) reliant les parties avant et arrière (5' et 5") du bâti de liaison (5) croise ou coupe l'axe (A8) du palier d'assemblage pivotant (8). En effet, lors du travail ou du labour, avec la charrue semi-portée à chariot (2) représentée à la figure 4, la roue gauche (non représentée) circule sur la surface du sol non labourée alors que la roue droite circule dans la raie de labour, ce qui veut dire que l'axe passant par l'essieu ou les deux roues est sensiblement incliné (par rapport au plan de la surface du sol non labourée ou à l'horizontale). La partie avant fixe (7') est alors inclinée en conséquence, tout comme le palier d'assemblage pivotant (8) et notamment son axe (A8). L'axe (A6) de la liaison articulée (6) est par contre parallèle à la surface du sol.

Cette liaison articulée (6) reliant les parties avant et arrière (5' et 5") du bâti de liaison (5) peut se présenter sous différentes formes, telles qu'une liaison pivot unique, au moins deux liaisons pivots associées ou encore une liaison à cardan.

Toutefois, de manière préférée, cette liaison articulée (6) consiste en une liaison rotule, éventuellement avec une faculté de rotulage limité autour de l'axe (A6). En plus de fournir des degrés de liberté multiples, utiles précisément pour ladite liaison (6), il s'agit d'une solution constructive compacte et économique.

Afin de fournir à la partie avant (3') de bâti principal (3) un support additionnel et un guidage supplémentaire lors du retournement, cette partie avant (3') peut être reliée à la partie avant fixe (7') du châssis support (7) par un second palier d'articulation pivotante (11), situé entre le palier d'articulation pivotante avant (9) et le palier d'articulation pivotante arrière (10) et aligné avec ledit palier d'articulation pivotante avant (9), en s'étendant de préférence devant ledit palier d'assemblage pivotant (8) et en présentant un axe (A11) coupant l'axe (A8) de ce dernier et confondu avec l'axe (A9) du palier d'articulation pivotante avant (9).

Préférentiellement, les axes (A9), (A10) et (A11) sont tous strictement confondus en position de travail de la charrue (1), comme le montre la figure 4. Dans la position de transport, les axes (A9) et (A11) sont confondus mais l'axe (A10) coupe les axes (A9) et (A11) puisque la partie arrière basculante (7") est relevée.

La figure 2 illustre la charrue (1) réversible dans sa position de transport. La roue gauche n'est pas représentée sur la figure 2 pour une meilleure visibilité autour de la partie avant fixe (7') et de la partie arrière basculante (7") du châssis support (7). On remarque que la partie avant (3') du bâti principal (3) est sensiblement inclinée par rapport à la surface du sol alors que la partie arrière (3") est sensiblement parallèle à la surface du sol. La figure 1 illustre la position de travail de la charrue (1). On constate que les corps de labour (4) sont orientés de façon à ce que leur contresep respectif soit parallèle à la direction d'avance (A). La partie avant (3') et la partie arrière (3") sont parallèles l'une par rapport à l'autre, en vue de dessus. La roue gauche du chariot (2) circule dans la raie de labour réalisé par le dernier corps de labour (4) de la partie avant (3') ou, comme représenté ici, le corps de labour (4) fixé sur la partie avant (5') du bâti de liaison (5).

Avantageusement, le second pallier d'articulation pivotante (11) est situé plus proche du palier d'articulation pivotante arrière (10) que du palier d'articulation pivotante avant (9), avantageusement à proximité du palier d'assemblage pivotant (8).

La mise en oeuvre d'un second palier (11) permet d'aboutir à une construction plus solide et plus rigide de la charrue (1), ainsi qu'à un guidage plus précis lors du retournement.

En accord avec une caractéristique constructive additionnelle de l'invention, une biellette (12) articulée à ses deux extrémités solidarise l'élément (10') du palier d'articulation pivotante arrière (10), qui est mobile par rapport à la partie arrière (7") du châssis support (7), avec la partie arrière (5") du bâti de liaison (5).

Comme le montrent à titre d'exemple les figures 1 à 3, la charrue (1) comprend également un moyen de retournement (13) des parties avant (3') et arrière (3") de bâti principal (3), par exemple sous la forme d'un vérin, relié à la partie avant (5') du bâti de liaison (5) pour l'entrainement de ce dernier, ledit moyen de retournement (13) étant d'autre part avantageusement relié à la partie avant fixe (7') du châssis support (7), préférentiellement au niveau du palier d'articulation pivotante avant (9).

Un moyen d'actionnement (16), par exemple du type vérin, est aussi prévu pour basculer la partie arrière mobile (7") du châssis support (7) autour de son palier d'assemblage pivotant (8) avec la partie arrière fixe (7'), qui est préférentiellement directement monté sur l'essieu ou les moyeux du chariot (2). D'une manière avantageuse, le moyen d'actionnement (16) est configuré pour assurer le suivi de terrain de la charrue. La profondeur de travail est assurée par la roue de profondeur positionnée proche de l'extrémité avant de la partie avant (3') et la roue de profondeur positionnée sur la partie arrière (3"). Ainsi lors du travail ou du labour, le moyen d'actionnement (16) est libre, c'est-à-dire que la position du piston est flottante. Dans une alternative constructive toutefois, le moyen d'actionnement (16) peut être piloté ou verrouillé.

Lors du labour, lorsque la charrue (1) arrive dans la fourrière, c'est-à-dire au bord du champ, c'est la partie avant (3') du bâti principal (3) qui se lève d'abord puis la partie arrière (3"). On dit que la charrue sort du sol, les différents corps de labour (4) sortent de terre au fur et à mesure. Généralement, l'opérateur actionne le relevage du tracteur, puis l'actionneur situé entre la partie avant fixe (7') du chariot support (7) et le chariot (2). Il actionne ensuite le moyen d'actionnement (16) qui va soulever la partie arrière (3") avec ses corps de labour et finalement le moyen de retournement (13).

Selon une caractéristique constructive supplémentaire de l'invention, ressortant des figures 1 à 3 et 5 à titre d'exemple, la partie arrière (3") de bâti principal (3) est solidarisée avec la partie arrière (5") du bâti de liaison (5) par le biais d'une liaison articulée (14).

Cette liaison articulée (14) peut consister de manière non limitative en : une liaison pivot simple, une liaison combinée pivot+glissière ou encore au moins deux liaisons élémentaires parallèles, comme par exemple une liaison multi-branches comprenant trois biellettes (15, 15', 15") montées en parallèle et reliant chacune les deux parties arrières précitées (3" et 5") entre elles, avec assujettissement mutuel de ces deux parties dans des plans parallèles respectifs.

Bien entendu, l'invention n'est pas limitée au mode de réalisation décrit et représenté aux dessins annexés. Des modifications restent possibles, notamment du point de vue de la constitution des divers éléments ou par substitution d'équivalents techniques, sans sortir pour autant du domaine de protection de l'invention, lorsque l'étendu de protection de la revendication 1 est respecté.

## Revendications

1. Charrue réversible (1) semi-portée à chariot (2) ou monoroue, déplacée en utilisation selon une direction d'avance (DA) et comprenant une partie avant (3') de bâti principal (3) et une partie arrière (3") de bâti principal (3) dont chacune porte des corps de labour (4), ces deux parties de bâti principal (3' et 3") étant respectivement solidaires de parties avant (5') et arrière (5") d'un bâti de liaison (5) reliées mutuellement par une liaison articulée (6) connectant les deux parties de bâti principal (3' et 3") entre elles par leur intermédiaire, ladite charrue (1) comprenant également un châssis support (7) avec une partie avant fixe (7'), solidaire du chariot (2) ou de la roue, et une partie arrière basculante (7"), reliée à la partie avant fixe (7') par un palier d'assemblage pivotant (8) avec un axe (A8) perpendiculaire à la direction d'avance (DA), la partie avant (5') de bâti de liaison (5) étant reliée à la partie avant fixe (7') du châssis support (7) par un palier d'articulation pivotante avant (9) d'axe (A9) parallèle à la direction d'avance (DA), et la partie arrière (5") de bâti de liaison (5) étant reliée à la partie arrière basculante (7") du châssis support (7) par un palier d'articulation pivotante arrière (10) d'axe (A10) situé dans un plan contenant la direction d'avance (DA), les paliers d'articulation pivotante avant et arrière (9 et 10) formant des paliers de guidage du retournement respectivement des parties avant et arrière (3' et 3") du bâti principal (3),
charrue (1) **caractérisée en ce que** l'axe (A9) du palier d'articulation pivotante avant (9) coupe l'axe (A8) du palier d'assemblage pivotant (8) au niveau dudit palier d'assemblage pivotant (8).

2. Charrue selon la revendication 1, **caractérisée en ce que** l'axe (A10) du palier d'articulation pivotante arrière (10) coupe l'axe (A8) du palier d'assemblage pivotant (8) au niveau dudit palier d'assemblage pivotant (8).

3. Charrue selon la revendication 1 ou 2, **caractérisée en ce que**, en position de travail, les axes (A9) et (A10) des paliers d'articulation pivotante avant et arrière (9 et 10) respectivement sont situés dans un même plan vertical (PV), et sont préférentiellement mutuellement alignés.

4. Charrue selon l'une quelconque des revendications 1 à 3, **caractérisée en ce que**, en position de travail, l'axe (A6) ou l'un des axes d'articulation de la liaison articulée (6) reliant les parties avant et arrière (5' et 5") du bâti de liaison (5) coupe l'axe (A8) du palier d'assemblage pivotant (8).

5. Charrue selon l'une quelconque des revendications 1 à 4, **caractérisée en ce que** la liaison articulée (6) reliant les parties avant et arrière (5' et 5") du bâti de liaison (5) consiste en une liaison rotule.

6. Charrue selon l'une quelconque des revendications 1 à 5, **caractérisée en ce que** la partie avant (3') de bâti principal (3) est reliée à la partie avant fixe (7') du châssis support (7) par un second palier d'articulation pivotante (11), situé entre le palier d'articulation pivotante avant (9) et le palier d'articulation pivotante arrière (10) et aligné avec ledit palier d'articulation pivotante avant (9), en s'étendant de préférence devant ledit palier d'assemblage pivotant (8) et en présentant un axe (A11) coupant l'axe (A8) de ce dernier et confondu avec l'axe (A9) du palier d'articulation pivotante avant (9).

7. Charrue selon la revendication 6, **caractérisée en ce que** le second palier d'articulation pivotante (11) est situé plus proche du palier d'articulation pivotante arrière (10) que du palier d'articulation pivotante avant (9).

8. Charrue selon l'une quelconque des revendications 1 à 7, **caractérisée en ce qu'**une biellette (12) articulée à ses deux extrémités solidarise l'élément du palier d'articulation pivotante arrière (10), qui est mobile par rapport à la partie arrière (7") du châssis support (7), avec la partie arrière (5") du bâti de liaison (5).

9. Charrue selon l'une quelconque des revendications 1 à 8, **caractérisée en ce qu'**elle comprend également un moyen de retournement (13) des parties avant (3') et arrière (3") de bâti principal (3), par exemple sous la forme d'un vérin, relié à la partie avant (5') du bâti de liaison (5) pour l'entrainement de ce dernier, ledit moyen de retournement (13) étant d'autre part avantageusement relié à la partie avant fixe (7') du châssis support (7), préférentiellement au niveau du palier d'articulation pivotante avant (9)

10. Charrue selon l'une quelconque des revendications 1 à 8, **caractérisée en ce que** la partie arrière (3") de bâti principal (3) est solidarisée avec la partie arrière (5") du bâti de liaison (5) par le biais d'une liaison articulée (14).

## Patentansprüche

1. Aufsattelwendepflug (1) mit Karren (2) oder Einrad, der im Gebrauch in einer Vorschubrichtung (DA) bewegt wird und einen Vorderteil (3') eines Hauptgestells (3) und einen Hinterteil (3") eines Hauptgestells (3) umfasst, von denen jeder Pflugkörper (4) trägt, wobei diese beiden Hauptgestellteile (3' und 3") jeweils fest mit Vorder- (5') und Hinterteile (5") eines Verbindungsgestells (5) verbunden sind, die durch eine Gelenkverbindung (6) miteinander verbunden sind, welche die beiden Hauptgestellteile (3' und 3") über Selbige miteinander verbindet, wobei der Pflug (1) auch einen Tragrahmen (7) mit einem festen Vorderteil (7`), der fest mit dem Karren (2) oder dem Rad verbunden ist, und einem kippbaren Hinterteil (7") umfasst, der mit dem festen Vorderteil (7') durch ein drehbares Montagelager (8) mit einer zur Vorschubrichtung (DA) senkrechten Achse (A8) verbunden ist, wobei der Vorderteil (5') des Verbindungsgestells (5) über ein vorderes Drehgelenklager (9) mit einer zur Vorschubrichtung (DA) parallelen Achse (A9) mit dem festen Vorderteil (7') des Tragrahmens (7) verbunden ist, und wobei der Hinterteil (5") des Verbindungsgestells (5) über ein hinteres Drehgelenklager (10) mit einer Achse (A10), die in einer Ebene liegt, welche die Vorschubrichtung (DA) enthält, mit dem kippbaren Hinterteil (7") des Tragrahmens (7) verbunden ist, wobei die vorderen und hinteren Drehgelenklager (9 und 10) Führungslager für das Wenden des Vorder- bzw. Hinterteils (3' und 3") des Hauptgestells (3) bilden,
Pflug (1) **dadurch gekennzeichnet, dass** die Achse (A9) des vorderen Drehgelenklagers (9) die Achse (A8) des drehbaren Montagelagers (8) an dem drehbaren Montagelager (8) schneidet.

2. Pflug nach Anspruch 1, **dadurch gekennzeichnet, dass** die Achse (A10) des hinteren Drehgelenklagers (10) die Achse (A8) des drehbaren Montagelagers (8) an dem drehbaren Montagelager (8) schneidet.

3. Pflug nach Anspruch 1 oder 2, **dadurch gekennzeichnet, dass** in der Arbeitsstellung die Achsen (A9) und (A10) des vorderen und hinteren Drehgelenklagers (9 und 10) in derselben vertikalen Ebene (PV) liegen und vorzugsweise zueinander ausgerichtet sind.

4. Pflug nach irgendeinem der Ansprüche 1 bis 3, **dadurch gekennzeichnet, dass** in der Arbeitsstellung die Achse (A6) oder eine der Gelenkachsen der Gelenkverbindung (6), die den Vorder- und Hinterteil (5' und 5") des Verbindungsgestells (5) verbindet, die Achse (A8) des drehbaren Montagelagers (8) schneidet.

5. Pflug nach irgendeinem der Ansprüche 1 bis 4, **dadurch gekennzeichnet, dass** die Gelenkverbindung (6), die den Vorder- und den Hinterteil (5' und 5") des Verbindungsgestells (5) verbindet, aus einer Kugelgelenkverbindung besteht.

6. Pflug nach irgendeinem der Ansprüche 1 bis 5, **dadurch gekennzeichnet, dass** der Vorderteil (3') des Hauptgestells (3) mit dem festen Vorderteil (7') des Tragrahmens (7) durch ein zweites Drehgelenklager (11) verbunden ist, das zwischen dem vorderen Drehgelenklager (9) und dem hinteren Drehgelenklager (10) gelegen ist und mit dem vorderen Drehgelenklager (9) ausgerichtet ist, wobei es sich vorzugsweise vor dem drehbaren Montagelager (8) erstreckt und eine Achse (A11) aufweist, welche die Achse (A8) des Letzteren schneidet und mit der Achse (A9) des vorderen Drehgelenklagers (9) zusammenfällt.

7. Pflug nach Anspruch 6, **dadurch gekennzeichnet, dass** das zweite Drehgelenklager (11) näher an dem hinteren Drehgelenklager (10) als an dem vorderen Drehgelenklager (9) angeordnet ist.

8. Pflug nach irgendeinem der Ansprüche 1 bis 7, **dadurch gekennzeichnet, dass** eine an ihren beiden Enden gelenkig angebrachte Lenkstange (12) das Element des hinteren Drehgelenklagers (10), das in Bezug auf den Hinterteil (7") des Tragrahmens (7) beweglich ist, fest mit dem Hinterteil (5") des Verbindungsgestells (5) verbindet.

9. Pflug nach irgendeinem der Ansprüche 1 bis 8, **dadurch gekennzeichnet, dass** er auch ein Wendemittel (13) für den Vorder- (3') und Hinterteil (3") des Hauptgestells (3) umfasst, zum Beispiel in Form eines Zylinders, der mit dem Vorderteil (5') des Verbindungsgestells (5) für den Antrieb des Letzteren verbunden ist, wobei das Wendemittel (13) andererseits vorteilhafterweise mit dem festen Vorderteil (7') des Tragrahmens (7) verbunden ist, vorzugsweise auf Höhe des vorderen Drehgelenklagers (9).

10. Pflug nach irgendeinem der Ansprüche 1 bis 8, **dadurch gekennzeichnet, dass** der Hinterteil (3") des Hauptgestells (3) über eine Gelenkverbindung (14) fest mit dem Hinterteil (5") des Verbindungsgestells (5) verbunden ist.

## Claims

1. Reversible semi-mounted plow (1) with carriage (2) or monowheel, moved during use in a direction of advance (DA) and comprising a front part (3') of main frame (3) and a rear part (3") of main frame (3), each carrying plowbodies (4), these two main frame parts (3' and 3") being respectively rigidly fastened to front (5') and rear (5") parts of a connecting frame (5) connected together by an articulated connection (6) connecting the two main frame parts (3' and 3") to one another via these parts, the said plow (1) also comprising a carrier frame (7) with a fixed front part (7'), rigidly fastened to the carriage (2) or to the wheel, and a rocking rear part (7"), connected to the fixed front part (7') by a swivel assembly bearing (8) with an axis (A8) perpendicular to the direction of advance (DA), the front part (5') of the connecting frame (5) being connected to the fixed front part (7') of the carrier frame (7) by a front swivel joint bearing (9) with axis (A9) parallel to the direction of advance (DA), and the rear part (5") of the connecting frame (5) being connected to the rocking rear part (7") of the carrier frame (7) by a rear swivel joint bearing (10) with axis (A10) located in a plane containing the direction of advance (DA), the front and rear swivel joint bearings (9 and 10) forming guide bearings for respectively reversing the front and rear parts (3' and 3") of the main frame (3),
plow (1) **characterized in that** the axis (A9) of the front swivel joint bearing (9) intersects the axis (A8) of the swivel assembly bearing (8) at the level of the said swivel assembly bearing (8).

2. Plow according to claim 1, **characterized in that** the axis (A10) of the rear swivel joint bearing (10) intersects the axis (A8) of the swivel assembly bearing (8) at the level of the said swivel assembly bearing (8).

3. Plow according to claim 1 or 2, **characterized in that**, in the working position, the axes (A9) and (A10) of the front and rear swivel joint bearings (9 and 10) respectively are located in a same vertical plane (PV), and are preferably mutually aligned.

4. Plow according to any one of claims 1 to 3, **characterized in that**, in the working position, the axis (A6) or one of the articulation axes of the articulated connection (6) connecting the front and rear parts (5' and 5") of the connecting frame (5) intersects the axis (A8) of the swivel assembly bearing (8).

5. Plow according to any one of claims 1 to 4, **characterized in that** the articulated connection (6) connecting the front and rear parts (5' and 5") of the connecting frame (5) consists of a ball joint connection.

6. Plow according to any of claims 1 to 5, **characterized in that** the front part (3') of the main frame (3) is connected to the fixed front part (7') of the carrier frame (7) by a second swivel joint bearing (11), located between the front swivel joint bearing (9) and the rear swivel joint bearing (10) and aligned with the said front swivel joint bearing (9), extending preferably in front of the said swivel assembly bearing (8) and having an axis (A11) intersecting the axis (A8) of the latter and coinciding with the axis (A9) of the front swivel joint bearing (9).

7. Plow according to claim 6, **characterized in that** the second swivel joint bearing (11) is located closer to the rear swivel joint bearing (10) than to the front swivel joint bearing (9).

8. Plow according to any one of claims 1 to 7, **characterized in that** a tie rod (12) articulated at its both ends rigidly fastens the element of the rear swivel joint bearing (10), which is movable relative to the rear part (7") of the carrier frame (7), to the rear part (5") of the connecting frame (5).

9. Plow according to any one of claims 1 to 8, **characterized in that** it also comprises a reversing means (13) for the front (3') and rear (3") parts of main frame (3), for example in the form of a cylinder, connected to the front part (5') of the connecting frame (5) for driving the latter, the said reversing means (13) also advantageously being connected to the fixed front part (7') of the carrier frame (7), preferably at the level of the front swivel joint bearing (9)

10. Plow according to any one of claims 1 to 8, **characterized in that** the rear part (3") of main frame (3) is rigidly fastened to the rear part (5") of the connecting frame (5) by means of an articulated connection (14).
